# EUROPEAN PATENT APPLICATION

(11) **EP 4 657 622 A1**
(43) Date of publication of application: **03.12.2025**
(21) Application number: 23928324.5
(22) Date of filing: 19.10.2023
(51) Int. Cl.: H01M 50/202, H01M 50/124, H01M 50/10

(54) **BATTERY CELL, BATTERY AND ELECTRIC DEVICE**

(30) Priority: 17.03.2023 CN 202310264491
(71) Applicant: Contemporary Amperex Technology (Hong Kong) Limited, Hong Kong (HK); Contemporary Amperex Technology (Hong Kong) Limited, Central, Hong Kong (HK)
(72) Inventor: XU, Liangfan, Ningde, Fujian 352100 (CN); ZHOU, Wenlin, Ningde, Fujian 352100 (CN); LI, Xing, Ningde, Fujian 352100 (CN); LI, Quankun, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2023/125431
(87) International publication number: WO 2024/193020

(57) **Abstract**

A battery cell, a battery, and a power consuming device are provided. The battery cell includes a housing and a protective member. The housing includes a shell and an end cap, the shell has an opening, and the end cap is connected to the shell and closes the opening. The end cap is connected to the shell to form a first connection portion. The protective member is arranged on an outer surface of the housing and covers at least a part of the first connection portion. The protective member includes a liquid absorbing layer and a barrier layer, and the barrier layer is located on a side of the liquid absorbing layer facing away from the first connection portion. The protective member is arranged on the battery cell, and the protective member covers at least a part of the first connection portion. When liquid leakage occurs at the first connection portion, the liquid absorbing layer can absorb liquid leaking from the first connection portion, and when the liquid absorbing layer absorbs the liquid and reaches saturation, the barrier layer can prevent the liquid from dripping from the side of the liquid absorbing layer facing away from the first connection portion, so that the liquid absorbed by the liquid absorbing layer is less likely to leak out, and the liquid is prevented from flowing in all directions to cause short circuit and fire or from being ignited by high-voltage sparking, helping improve the safety of the battery cell.

## Description

### CROSS-REFERENCE TO RELATED APPLICATIONS

The present application claims priority to Chinese Patent Application (Application No.: 202310264491X), entitled "BATTERY CELL, BATTERY, AND POWER CONSUMING DEVICE" and filed on March 17, 2023, which is incorporated herein by reference in its entirety.

### TECHNICAL FIELD

The present application relates to the field of batteries, and specifically, to a battery cell, a battery, and a power consuming device.

### BACKGROUND

Batteries are widely applied in the new energy field, for example, electric vehicles or new energy vehicles, and the new energy vehicles or the electric vehicles have become a new development trend of the automobile industry. For the development of the battery technology, design factors in many aspects, for example, performance parameters such as an energy density, a discharge capacity, and a charge-discharge rate need to be all considered. In addition, the safety of the batteries also needs to be considered. However, the existing batteries have poor safety.

### SUMMARY

An objective of embodiments of the present application is to provide a battery cell, a battery, and a power consuming device, and aims to alleviate a problem of poor safety of batteries in the related art.

According to a first aspect, an embodiment of the present application provides a battery cell, including a housing and a protective member, where the housing includes a shell and an end cap, the shell has an opening, the end cap is connected to the shell and closes the opening, and the end cap is connected to the shell to form a first connection portion; the protective member is arranged on an outer surface of the housing and covers at least a part of the first connection portion; and The protective member includes a liquid absorbing layer and a barrier layer, and the barrier layer is located on a side of the liquid absorbing layer facing away from the first connection portion.

In the foregoing technical solution, the protective member is arranged on the battery cell, and the protective member covers at least a part of the first connection portion. When liquid leakage occurs at the first connection portion, the liquid absorbing layer can absorb liquid leaking from the first connection portion, and when the liquid absorbing layer absorbs the liquid and reaches saturation, the barrier layer can prevent the liquid from dripping through the side of the liquid absorbing layer facing away from the first connection portion, so that the liquid absorbed by the liquid absorbing layer is less likely to leak out, and the liquid is prevented from flowing in all directions to cause short circuit and fire or from being ignited by high-voltage sparking, helping improve the safety of the battery cell.

In an optional technical solution of the embodiments of the present application, a material of the barrier layer includes an insulating material.

In the foregoing technical solution, by causing the material of the barrier layer to include an insulating material, the barrier layer can not only prevent the liquid from dripping through the side of the liquid absorbing layer facing away from the first connection portion when the liquid absorbing layer absorbs the liquid and reaches saturation, but also can play an insulating role, thereby reducing a risk of short circuit caused by contact between another component and the liquid absorbing layer.

In an optional technical solution of the embodiments of the present application, the protective member further includes an insulating layer, the insulating layer is located on a side of the liquid absorbing layer facing the first connection portion, and the insulating layer is configured to allow liquid to pass through.

In the foregoing technical solution, by arranging the insulating layer, the liquid absorbing layer is arranged between the barrier layer and the insulating layer, so that the protective member is arranged on the outer surface of the housing. In addition, the insulating layer can reduce a speed at which the liquid leaks from the first connection portion to some extent, so that the liquid passing through the insulating layer can be effectively absorbed by the liquid absorbing layer, helping improve the safety of the battery cell.

In an optional technical solution of the embodiments of the present application, a first through hole is provided on the insulating layer.

In the foregoing technical solution, by providing the first through hole on the insulating layer, the liquid leaking from the first connection portion can enter the liquid absorbing layer through the first through hole to be absorbed by the liquid absorbing layer.

In an optional technical solution of the embodiments of the present application, a hole diameter of the first through hole is D, and D meets: 0.2 mm≤D≤2 mm.

In the foregoing technical solution, by setting the hole diameter of the first through hole between 0.2 mm and 2 mm, the liquid can be allowed to pass through, and a strength of the protective member is not too low. If D<0.2 mm, the hole diameter of the first through hole is excessively small, which is not conducive to passing through of the liquid. If D>2 mm, the hole diameter of the first through hole is excessively large, the strength of the protective member may be reduced, leading to a decrease in a protection effect on the housing.

In an optional technical solution of the embodiments of the present application, the insulating layer is connected to the shell and/or the end cap through an adhesive layer, and a projection of the adhesive layer at least partially does not overlap with a projection of the first through hole.

In the foregoing technical solution, the insulating layer is bonded to the shell and/or the end cap through the adhesive layer, and the adhesive layer may prevent the liquid from flowing toward the liquid absorbing layer. The projection of the adhesive layer at least partially does not overlap with the projection of the first through hole, that is, the adhesive layer does not fully block the first through hole, so that the liquid can bypass the adhesive layer and enter the liquid absorbing layer through the first through hole.

In an optional technical solution of the embodiments of the present application, the adhesive layer is provided with a second through hole, and a position of the second through hole corresponds to a position of the first through hole.

In the foregoing technical solution, by providing the second through hole on the adhesive layer, the liquid leaking from the first connection portion passes through the adhesive layer through the second through hole, so that the liquid leaking from the first connection portion can be absorbed by the liquid absorbing layer, thereby ensuring the safety of the battery cell.

In an optional technical solution of the embodiments of the present application, the insulating layer is connected to the shell and/or the end cap through an adhesive layer, and the adhesive layer is configured to be dissolvable by the liquid.

In the foregoing technical solution, the adhesive layer can be dissolved by the liquid, so that the liquid leaking from the first connection portion can pass through the adhesive layer and absorbed by the protective member. It should be noted that, the liquid leaking from the first connection portion can only dissolve the adhesive layer near a position from which the liquid leaks and does not dissolve the whole adhesive layer, so that a connection between the protective member and the housing can be ensured.

In an optional technical solution of the embodiments of the present application, the protective member includes a first protective portion and a second protective portion that are perpendicular to each other, the first protective portion covers the first connection portion, and the second protective portion is attached to an outer surface of the shell or the end cap.

In the foregoing technical solution, the first protective portion covers the first connection portion, and the second protective portion is attached to the outer surface of the shell or the end cap. On one hand, when the liquid leaking from the first connection portion spreads toward the shell or the end cap, the liquid may also be absorbed by the second protective portion, so that a protection area of the protective member is enlarged, helping improve the safety of the battery cell. On the other hand, the second protective portion is attached to the shell or the end cap, so that the connection between the protective member and the housing is enhanced, and the protective member is not easy to separate from the housing.

In an optional technical solution of the embodiments of the present application, the first protective portion is connected to the shell and/or the end cap through an adhesive layer.

In the foregoing technical solution, the first protective portion is connected to the shell and/or the end cap through the adhesive layer, so that a connection strength between the first protective portion and the housing is enhanced, helping ensure a liquid absorption effect of the first connection portion during liquid leakage.

In an optional technical solution of the embodiments of the present application, the adhesive layer extends along an outer contour track of the first protective portion.

In the foregoing technical solution, the adhesive layer extends along the outer contour track of the first protective portion, so that the adhesive layer can play a sealing role and prevent the liquid from exuding from an outer contour of the first protective portion, helping the protective member absorb the liquid leaking from the first connection portion and further improve the safety of the battery cell.

In an optional technical solution of the embodiments of the present application, a material of the liquid absorbing layer can absorb liquid at least 3 times a volume of the liquid absorbing layer.

In the foregoing technical solution, a liquid absorbing material that can absorb liquid at least 3 times a volume of the material is made into the protective member, so that the protective member absorbs the liquid leaking from the first connection portion. An amount of free liquid in the battery cell is limited, so that when the liquid absorbing material can absorb liquid at least three times the volume of the material, it can be ensured that the leaked liquid is effectively absorbed.

In an optional technical solution of the embodiments of the present application, the liquid absorbing material includes at least one of sponge, carbon fiber, or adsorption resin.

In the foregoing technical solution, the sponge, the carbon fiber, and the adsorption resin have a strong liquid absorbing capability, which is conducive to fully absorbing the liquid leaking from the first connection portion and improving the safety of the battery cell.

In an optional technical solution of the embodiments of the present application, an accommodating space configured to collect liquid is formed in the protective member, and the first connection portion is at least partially located in the accommodating space.

In the foregoing technical solution, the accommodating space is formed in the protective member, and the liquid leaking from the first connection portion can be first stored in the accommodating space and then gradually absorbed by the liquid absorbing layer, so that the liquid is prevented from flowing in all directions to cause short circuit and fire or from being ignited by high-voltage sparking, helping improve the safety of the battery cell.

In an optional technical solution of the embodiments of the present application, the protective member includes a top wall and a peripheral wall, the top wall covers the outer surface of the end cap, the peripheral wall is arranged around an outer edge of the top wall, the peripheral wall covers at least a part of an outer peripheral surface of the shell, and the top wall and the peripheral wall encircle the accommodating space.

In the foregoing technical solution, the top wall and the peripheral wall encircle the accommodating space, when liquid leakage occurs at the first connection portion, the protective member can first store the liquid leaking from the first connection portion in the accommodating space, and the liquid is then gradually absorbed by the liquid absorbing layer, so that the liquid is prevented from flowing in all directions to cause short circuit and fire or from being ignited by high-voltage sparking, helping improve the safety of the battery cell.

In an optional technical solution of the embodiments of the present application, the battery cell includes a pressure relief mechanism, the pressure relief mechanism is connected to the end cap or the shell and forms a second connection portion, and the protective member covers at least a part of the second connection portion.

In the foregoing technical solution, the second connection portion is also a relatively weak position, and the liquid easily leaks from the second connection portion. At least a part of the second connection portion is covered by the protective member, so that when liquid leakage occurs at the second connection portion, the liquid absorbing layer can absorb liquid leaking from the second connection portion, and the barrier layer can prevent the liquid from dripping when the liquid absorbing layer absorbs the liquid and reaches saturation. Therefore, the liquid absorbed by the liquid absorbing layer is less likely to leak out, and the liquid is prevented from flowing in all directions to cause short circuit and fire or from being ignited by high-voltage sparking, helping improve the safety of the battery cell.

In an optional technical solution of the embodiments of the present application, the protective member totally covers the first connection portion.

In the foregoing technical solution, the protective member totally covers the first connection portion. In this way, no matter from which on the first connection portion liquid leaks, the liquid can be absorbed by the liquid absorbing layer, so that the liquid is further prevented from flowing in all directions to cause short circuit and fire or from being ignited by high-voltage sparking, helping improve the safety of the battery cell.

In an optional technical solution of the embodiments of the present application, the protective member covers at least a part of the end cap and at least a part of the shell.

In the foregoing technical solution, the protective member covers at least a part of the end cap and at least a part of the shell, so that positions near the first connection portion are all covered, thereby further improving an absorption effect for the liquid leaking from the first connection portion.

In an optional technical solution of the embodiments of the present application, the battery cell includes an electrode terminal, the electrode terminal is arranged on the end cap, and the protective member is provided with an avoidance hole configured to avoid the electrode terminal.

In the foregoing technical solution, the electrode terminal needs to output electric energy of the battery cell or input electric energy to the battery cell, so that when the protective member is arranged on the end cap, the protective member needs to avoid the electrode terminal, to prevent the protective member from interfering with input or output of the electric energy of the battery cell.

In an optional technical solution of the embodiments of the present application, the battery cell further includes an electrode assembly, the electrode assembly is accommodated in the housing, and the end cap is configured to support the electrode assembly in a gravity direction.

In the foregoing technical solution, the end cap supports the electrode assembly in the gravity direction, which corresponds to a scenario in which the battery cell is inverted and used. When the battery cell is inverted and used, a risk of liquid leakage at the first connection portion is increased, and the protective member can play a better protection effect.

In an optional technical solution of the embodiments of the present application, the shell includes a side wall and a bottom wall that are integrally formed, and the side wall is arranged around the bottom wall; along a thickness direction of the bottom wall, one end of the side wall is connected to the bottom wall, and the other end of the side wall encircles an opening; and the side wall and the bottom wall jointly define an accommodating cavity; and the battery cell further includes an electrode assembly and an electrode terminal, the electrode assembly is accommodated in the accommodating cavity, the electrode assembly is electrically connected to the electrode terminal, the end cap closes the opening, the end cap is configured to support the electrode assembly in a gravity direction, and the electrode terminal is arranged on the bottom wall.

In the foregoing technical solution, the end cap supports the electrode assembly in the gravity direction, which corresponds to a scenario in which the battery cell is inverted and used. When the battery cell is inverted and used, a risk of liquid leakage at the first connection portion is increased, and the protective member can play a better protection effect. In addition, the electrode terminal is arranged on the bottom wall, and compared with a technical solution that the electrode terminal is arranged on the end cap, liquid leakage is less likely to occur at the electrode terminal. Besides, the protective member may not be provided with the avoidance hole for avoiding the electrode terminal, so that an electrolyte solution stored in the protective member is less likely to leak from the avoidance hole, helping improve a liquid storage capability of the protective member.

According to a second aspect, an embodiment of the present application further provides a battery, including the foregoing battery cell.

In an optional technical solution of the embodiments of the present application, the battery further includes a wire harness isolation member, a liquid drainage channel is provided on the wire harness isolation member, a third through hole is provided on the barrier layer, and the third through hole is provided opposite to the liquid drainage channel.

In the foregoing technical solution, by providing the third through hole at a position of the barrier layer corresponding to the liquid drainage channel, when the liquid absorbing layer reaches saturation, the liquid can drip from the third through hole into the liquid drainage channel, and the liquid passing through the liquid drainage channel no longer has a safety risk, helping improve the safety of the battery cell.

In an optional technical solution of the embodiments of the present application, the battery further includes a box, the battery cell is arranged in the box, and the end cap is arranged on a side of the battery cell close to a bottom wall of the box.

In the foregoing technical solution, the end cap is arranged on the side of the battery cell close to the bottom wall of the box, that is, the battery cell is inverted in the box.

According to a third aspect, an embodiment of the present application further provides a power consuming device, including the foregoing battery, where the battery is configured to provide electric energy for the power consuming device.

### BRIEF DESCRIPTION OF THE DRAWINGS

To describe the technical solutions in the embodiments of the present application more clearly, the accompanying drawings required for describing the embodiments are briefly described below. It should be understood that, the following accompanying drawings show merely some embodiments of the present application and therefore should not be considered as a limitation to the scope, and a person of ordinary skill in the art may further obtain other related accompanying drawings according to the accompanying drawings without creative efforts.
FIG. 1 is a schematic structural diagram of a vehicle according to some embodiments of the present application;
FIG. 2 is an exploded view of a battery according to some embodiments of the present application;
FIG. 3 is a schematic structural diagram of a battery cell according to some embodiments of the present application;
FIG. 4 is an exploded view of a battery cell according to some embodiments of the present application;
FIG. 5 is a schematic top view of a battery cell according to some embodiments of the present application;
FIG. 6 is a schematic top view of a protective member according to some embodiments of the present application;
FIG. 7 is a cross-sectional view at a position A-A in FIG. 6;
FIG. 8 is a schematic diagram of a connection between a protective member and an adhesive layer according to some embodiments of the present application;
FIG. 9 is a schematic structural diagram of a battery cell according to some other embodiments of the present application;
FIG. 10 is a schematic structural diagram of a battery cell according to still some other embodiments of the present application;
FIG. 11 is a schematic structural diagram of a battery cell according to yet some other embodiments of the present application; and
FIG. 12 is a schematic structural diagram of a protective member according to some other embodiments of the present application.

List of reference numerals: 10-Box; 11-First part; 12-Second part; 20-Battery cell; 21-Protective member; 211-Avoidance hole; 212-Liquid absorbing layer; 213-Barrier layer; 214-Insulating layer; 2141-First through hole; 215-Adhesive layer; 2151-Second through hole; 216-First protective portion; 217-Second protective portion; 218-Top wall; 219-Peripheral wall; 22-Housing; 221-Shell; 222-End cap; 223-First connection portion; 23-Electrode assembly; 24-Electrode terminal; 25-Pressure relief mechanism; 251-Second connection portion; 100-Battery; 200-Controller; 300-Motor; and 1000-Vehicle.

### DETAILED DESCRIPTION

To make the objectives, technical solutions, and advantages of the embodiments of the present application clearer, the following clearly describes the technical solutions in the embodiments of the present application with reference to the accompanying drawings in the embodiments of the present application. Apparently, the described embodiments are merely some rather than all of the embodiments of the present application. All other embodiments obtained by a person of ordinary skill in the art based on the embodiments of the present application without creative efforts shall fall within the protection scope of the present application.

Unless otherwise defined, meanings of all technical and scientific terms used in the present application are the same as those usually understood by a person skilled in the art to which the present application belongs. In the present application, terms used in the specification of the present application are only intended to describe specific embodiments, and are not intended to limit the present application. In the specification, claims, and accompanying drawings of the present application, the terms "include", "have", and any other variants are intended to cover non-exclusive inclusion. In the specification, claims, and accompanying drawings of the present application, the terms "first", "second", and the like are intended to distinguish between different objects but do not indicate a particular sequence or primary-secondary relationship.

"Embodiment" mentioned in the present application means that particular features, structures, or characteristics described with reference to the embodiment may be included in at least one embodiment of the present application. The term appearing at different positions of the specification may not refer to the same embodiment or an independent or alternative embodiment that is mutually exclusive with another embodiment.

In the description of the present application, it should be noted that, unless otherwise explicitly specified or defined, the terms such as "mount", "connect", "connection", and "attachment" should be understood in a broad sense. For example, the connection may be a fixed connection, a detachable connection, or an integral connection; or the connection may be a direct connection, an indirect connection through an intermediary, or internal communication between two elements. A person of ordinary skill in the art may understand specific meanings of the terms in the present application according to specific situations.

In the present application, the term "and/or" describes only an association relationship for describing associated objects and represents that three relationships may exist. For example, A and/or B may represent the following three cases: Only A exists, both A and B exist, and only B exists. In addition, the character "/" in the present application generally indicates an "or" relationship between the associated objects.

In the embodiments of the present application, the same reference numerals represent the same components, and for brevity, in different embodiments, detailed description of the same components is omitted. It should be understood that, sizes such as thicknesses, lengths, widths, and the like of various components, and sizes such as a whole thickness, length, width, and the like of an integration apparatus in the embodiments of the present application shown in the accompanying drawings are merely description, and shall not constitute any limitation to the present application.

"A plurality of' appearing in the present application means more than two (including two).

In the present application, a battery cell may include a lithium-ion secondary battery cell, a lithium-ion primary battery cell, a lithium-sulfur battery cell, a sodium-lithium-ion battery cell, a sodium-ion battery cell, or a magnesium-ion battery cell, which is not limited in the embodiments of the present application. The battery cell may be cylindrical, flat, cuboid, or in other shapes, which is not limited in the embodiments of the present application. Generally, the battery cell is divided into three types according to encapsulating methods: a cylindrical battery cell, a square battery cell, and a soft package battery cell, which is also not limited in the embodiments of the present application.

A battery mentioned in the embodiments of the present application is a single physical module including one or more battery cells to provide a higher voltage and a higher capacity. For example, the battery mentioned in the present application may include a battery module, a battery pack, or the like. The battery generally includes a box for packaging the one or more battery cells. The box can prevent liquids or other foreign objects from affecting charging or discharging of the one or more battery cells.

The battery cell includes an electrode assembly and an electrolyte solution, and the electrode assembly is formed by a positive electrode plate, a negative electrode plate, and a separator. The battery cell works mainly relying on movement of metal ions between the positive electrode plate and the negative electrode plate. The positive electrode plate includes a positive electrode current collector and a positive electrode active substance layer, the positive electrode active substance layer is coated on a surface of the positive electrode current collector, the positive electrode current collector not coated with the positive electrode active substance layer protrudes out of the positive electrode current collector already coated with the positive electrode active substance layer, and the positive electrode current collector not coated with the positive electrode active substance layer is used as a positive electrode tab. By using a lithium-ion battery as an example, a material of the positive electrode current collector may be aluminum, and a positive electrode active substance may be lithium cobalt oxide, lithium iron phosphate, ternary lithium, lithium manganese oxide, or the like. The negative electrode plate includes a negative electrode current collector and a negative electrode active substance layer, the negative electrode active substance layer is coated on a surface of the negative electrode current collector, the negative electrode current collector not coated with the negative electrode active substance layer protrudes out of the negative electrode current collector already coated with the negative electrode active substance layer, and the negative electrode current collector not coated with the negative electrode active substance layer is used as a negative electrode tab. A material of the negative electrode current collector may be copper, and a negative electrode active substance may be carbon, silicon, or the like. To ensure that no fusing occurs when a large current passes through, there are a plurality of positive electrode tabs and the positive electrode tabs are stacked, and there are a plurality of negative electrode tabs and the negative electrode tabs are stacked. The separator may be made of a material such as polypropylene (PP) or polyethylene (PE). In addition, the electrode assembly may be a winding type structure or a stacked structure, which is not limited in the embodiments of the present application.

At present, from the perspective of development of the market situation, the battery is applied increasingly. The battery is not only used in energy storage power systems such as water power, fire power, wind power, and solar power stations, but also widely used in electric vehicles such as an electric bicycle, an electric motorcycle, and an electric automobile, and a plurality of fields such as military equipment and aerospace. With continuous expansion of application fields of the battery, market demands for the battery are also expanding.

For the development of the battery technology, design factors in many aspects, for example, performance parameters such as a battery life, an energy density, a discharge capacity, and a charge-discharge rate need to be considered simultaneously. In addition, the safety of the battery also needs to be considered. However, existing batteries have poor safety.

It is found by the inventor through research that, the battery cell includes a shell and an end cap, the shell has an opening, and the end cap is connected to the shell and closes the opening. The electrolyte solution easily leaks from a connection position of the shell and the end cap, and the leaked electrolyte solution easily leads to short circuit of the battery cell, or when the electrolyte solution flows to a high-voltage region, the electrolyte solution is easily ignited by high-voltage sparking, leading to a safety accident. The case that the electrolyte solution leaks from the connection position of the shell and the end cap is particularly conspicuous when the battery cell is inverted and used, leading to poor safety of the battery.

In view of this, an embodiment of the present application provides a battery cell, including a housing and a protective member, where the housing includes a shell and an end cap, the shell has an opening, and the end cap is connected to the shell and closes the opening. The end cap is connected to the shell to form a first connection portion. The protective member is arranged on an outer surface of the housing and covers at least a part of the first connection portion. The protective member includes a liquid absorbing layer and a barrier layer, and the barrier layer is located on a side of the liquid absorbing layer facing away from the first connection portion.

The protective member is arranged on the battery cell, and the protective member covers at least a part of the first connection portion. When liquid leakage occurs at the first connection portion, the liquid absorbing layer can absorb liquid leaking from the first connection portion, and when the liquid absorbing layer absorbs the liquid and reaches saturation, the barrier layer can prevent the liquid from dripping through the side of the liquid absorbing layer facing away from the first connection portion, so that the liquid absorbed by the liquid absorbing layer is less likely to leak out, and the liquid is prevented from flowing in all directions to cause short circuit and fire or from being ignited by high-voltage sparking, helping improve the safety of the battery cell.

The technical solution described in this embodiment of the present application is applicable to a battery and a power consuming device using the battery.

The power consuming device may be a vehicle, a mobile phone, a portable device, a notebook computer, a ship, a spacecraft, an electric toy, or an electric tool. The spacecraft includes an aircraft, a rocket, a space shuttle, or a spaceship. The electric toy includes a fixed or movable electric toy, for example, a game console, an electric vehicle toy, an electric ship toy, or an electric aircraft toy. The electric tool includes a metal cutting electric tool, a grinding electric tool, an assembly electric tool, or a railway electric tool, for example, an electric drill, an electric grinding machine, an electric wrench, an electric screwdriver, an electric hammer, an impact drill, a concrete vibrator, or an electric planer. The power consuming device is not particularly limited in the embodiments of the present application.

For ease of description, in the following embodiments, description is provided by using an example in which the power consuming device is a vehicle 1000.

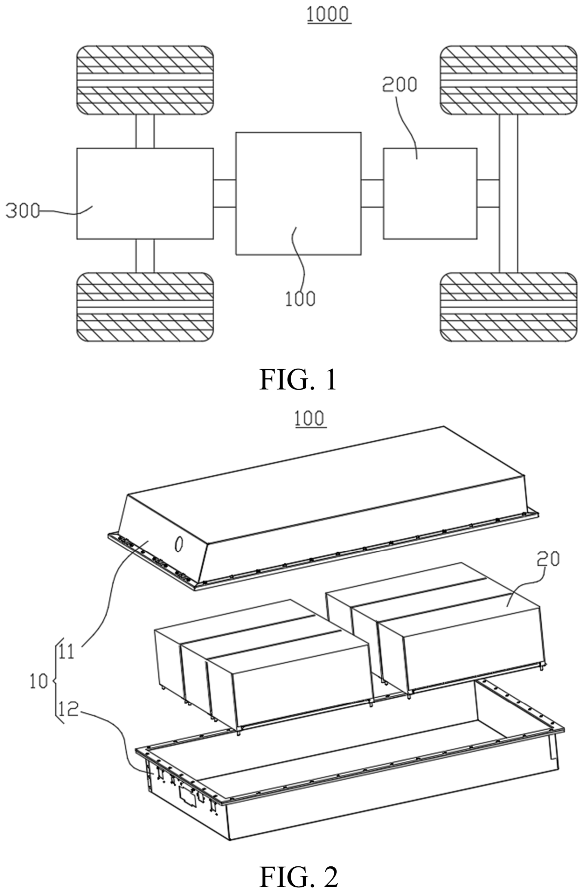

Referring to FIG. 1, FIG. 1 is a schematic structural diagram of a vehicle 1000 according to some embodiments of the present application. The vehicle 1000 may be a fuel powered vehicle, a gas powered vehicle, or a new energy vehicle. The new energy vehicle may be a pure electric vehicle, a hybrid electric vehicle, or an extended range vehicle. A battery 100 is arranged inside the vehicle 1000, and the battery 100 may be arranged at a bottom, head, or tail of the vehicle 1000. The battery 100 may be configured to supply power to the vehicle 1000. For example, the battery 100 may be used as an operating power supply of the vehicle 1000. The vehicle 1000 may further include a controller 200 and a motor 300. The controller 200 is configured to control the battery 100 to supply power to the motor 300, for example, to meet operating electricity requirements during starting, navigation, and traveling of the vehicle 1000.

In some embodiments of the present application, the battery 100 can not only be used as the operating power supply of the vehicle 1000, but can also be used as a driving power supply of the vehicle 1000, to alternatively or partially replace fuel or natural gas to provide driving power for the vehicle 1000.

Referring to FIG. 2, FIG. 2 is an exploded view of a battery 100 according to some embodiments of the present application. The battery 100 includes a box 10 and a battery cell 20, where the battery cell 20 is accommodated in the box 10. The box 10 is configured to provide an accommodating space for the battery cell 20, and the box 10 may use a plurality of structures. In some embodiments, the box 10 may include a first part 11 and a second part 12, the first part 11 and the second part 12 cover each other, and the first part 11 and the second part 12 jointly define the accommodating space for accommodating the battery cell 20. The second part 12 may be a hollow structure being open on one side, the first part 11 may be a plate-like structure, and the first part 11 covers an open side of the second part 12, so that the first part 11 and the second part 12 jointly define the accommodating space. Alternatively, each of the first part 11 and the second part 12 may be a hollow structure being open on one side, and an open side of the first part 11 covers an open side of the second part 12. Certainly, the box 10 formed by the first part 11 and the second part 12 may be in various shapes, such as a cylinder or a cuboid.

In the battery 100, there may be a plurality of battery cells 20, and the plurality of battery cells 20 may be connected in series, parallel, or series-parallel, where series-parallel connection means that both series connection and parallel connection exist among the plurality of battery cells 20. The plurality of battery cells 20 may be directly connected in series, parallel, or series-parallel together, and then a whole formed by the plurality of battery cells 20 may be accommodated in the box 10. Certainly, the battery 100 may alternatively be in the form of a plurality of battery modules formed by the plurality of battery cells 20 that are first connected in series, parallel, or series-parallel, and the plurality of battery modules are then connected in series, parallel, or series-parallel to form a whole and accommodated in the box 10. The battery 100 may also include other structures, for example, the battery 100 may also include a bus component for achieving an electrical connection between the plurality of battery cells 20.

The battery cell 20 may be a secondary battery cell or a primary battery cell; or the battery cell may alternatively be a lithium-sulfur battery cell, a sodium-ion battery cell, or a magnesium-ion battery cell, but is not limited thereto. The battery cell 20 may be cylindrical, flat, cuboid, or in other shapes.

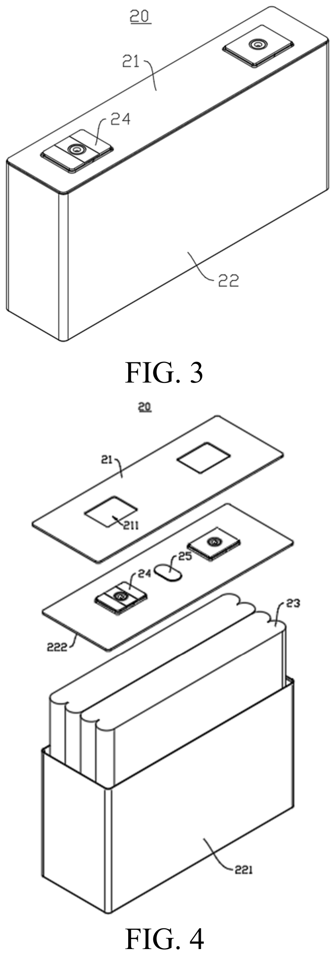

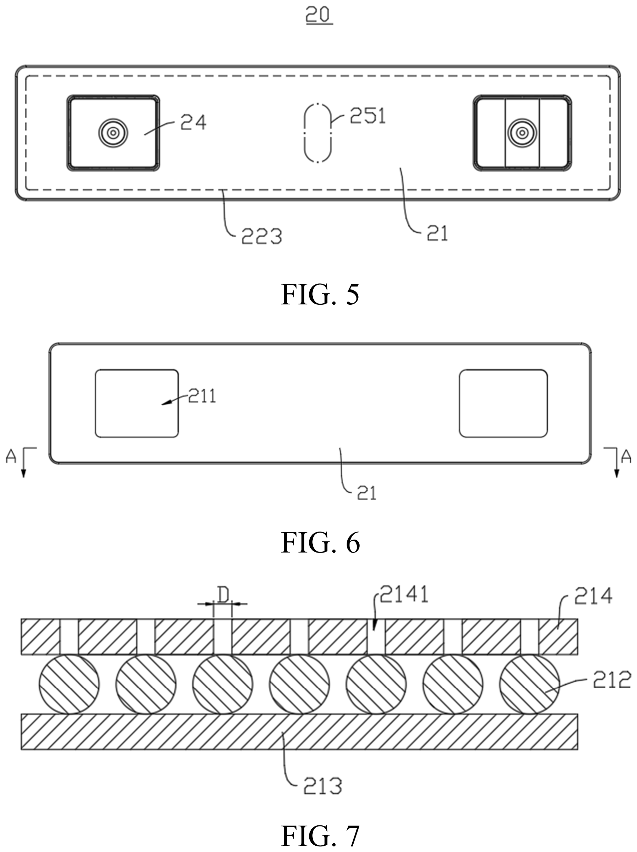

Referring to FIG. 3, FIG. 4, FIG. 5, FIG. 6, and FIG. 7, FIG. 3 is a schematic structural diagram of a battery cell 20 according to some embodiments of the present application. FIG. 4 is an exploded view of a battery cell 20 according to some embodiments of the present application. FIG. 5 is a schematic top view of a battery cell 20 according to some embodiments of the present application. FIG. 6 is a schematic top view of a protective member 21 according to some embodiments of the present application. FIG. 7 is a cross-sectional view at a position A-A in FIG. 6. An embodiment of the present application provides a battery cell 20, including a housing 22 and a protective member 21, where the housing 22 includes a shell 221 and an end cap 222, the shell 221 has an opening, and the end cap 222 is connected to the shell 221 and closes the opening. The end cap 222 is connected to the shell 221 to form a first connection portion 223. The protective member 21 is arranged on an outer surface of the housing 22 and covers at least a part of the first connection portion 223. The protective member 21 includes a liquid absorbing layer 212 and a barrier layer 213, and the barrier layer 213 is located on a side of the liquid absorbing layer 212 facing away from the first connection portion 223.

The battery cell 20 is a smallest unit forming a battery 100.

The housing 22 includes the end cap 222 and the shell 221, the shell 221 has an accommodating cavity being open on one side, and the accommodating cavity is configured to accommodate an electrode assembly 23. The end cap 222 is connected to the shell 221 and closes the opening.

The end cap 222 refers to a component that covers the opening of the shell 221 to isolate an internal environment of the battery cell 20 from an external environment. A shape of the end cap 222 is not limited and may be adapted to a shape of the shell 221 to fit the shell 221. Optionally, the end cap 222 may be made of a material with specified hardness and strength (for example, aluminum alloy), so that the end cap 222 is less likely to deform under extrusion and collision, enabling the battery cell 20 to have a higher structural strength and improved safety performance. The end cap 222 may also be made of various materials such as copper, iron, aluminum, stainless steel, aluminum alloy, or plastic, which is not particularly limited in the embodiments of the present application. In some embodiments, the battery cell 20 further includes an insulating member, the insulating member is arranged on an inner side of the end cap 222, and the insulating member may be configured to isolate electrical connection components in the shell 221 from the end cap 222, to reduce a risk of short circuit. For example, the insulating member may be made of plastic or rubber.

The shell 221 is a component configured to form the internal environment of the battery cell 20 together with the end cap 222, where the formed internal environment may be used for accommodating the electrode assembly 23, an electrolyte solution, and other components. The shell 221 and the end cap 222 may be independent components, an opening may be provided on the shell 221, and the end cap 222 covers the opening to form the internal environment of the battery cell 20. Without limitation, the end cap 222 and the shell 221 may alternatively be integrated. Specifically, the end cap 222 and the shell 221 may form a shared joint surface before other components are arranged inside the shell, and then the end cap 222 covers the shell 221 when the inside of the shell 221 needs to be enclosed. The shell 221 may be of various shapes and sizes, such as a rectangular shape, a cylindrical shape, and a hexagonal prism shape. Specifically, the shape of the shell 221 may be determined according to a specific shape and size of the electrode assembly 23. The shell 221 may be made of various materials such as copper, iron, aluminum, stainless steel, aluminum alloy, or plastic, which is not particularly limited in the embodiments of the present application.

The first connection portion 223 is formed through a connection between the end cap 222 and the shell 221. For example, when the end cap 222 is welded to the shell 221, the first connection portion 223 is a welding seam. Referring to FIG. 5, a position of the first connection portion 223 is shown through a dashed line in FIG. 5.

"The protective member 21 is arranged on an outer surface of the housing 22 and covers at least a part of the first connection portion 223" may also be understood as that the protective member 21 covers at least a part of the first connection portion 223 from the outer surface of the housing 22. The outer surface of the housing 22 is a surface of the housing 22 facing away from the accommodating cavity. An inner surface of the housing 22 is a surface of the housing 22 facing the accommodating cavity.

That the protective member 21 covers the first connection portion 223 means that the protective member 21 blocks an outer surface of the first connection portion 223. When the end cap 222 is welded to the shell 221, the protective member 21 blocks an outer surface of the welding seam.

The protective member 21 may cover a part of the first connection portion 223, or may totally cover the first connection portion 223.

The liquid absorbing layer 212 has a liquid absorbing capability, to absorb liquid leaking from the first connection portion 223.

The barrier layer 213 is arranged on the side of the liquid absorbing layer 212 facing away from the first connection portion 223. The barrier layer 213 is farther away from the first connection portion 223 than the liquid absorbing layer 212, and the barrier layer 213 at least partially covers the liquid absorbing layer 212, so that another component can be prevented from coming into contact with the liquid absorbing layer 212 to damage the liquid absorbing layer.

In some embodiments, an area of the barrier layer 213 is greater than or equal to an area of the liquid absorbing layer 212, so that the barrier layer 213 can well protect the liquid absorbing layer 212.

In the embodiments of the present application, the liquid may be at least one of an electrolyte solution, an additive, or a condensate.

The protective member 21 is arranged on the battery cell 20, and the protective member 21 covers at least a part of the first connection portion 223. When liquid leakage occurs at the first connection portion 223, the protective member 21 can store the liquid leaking from the first connection portion 223, to prevent the liquid from flowing in all directions to cause short circuit and fire or from being ignited by high-voltage sparking, helping improve the safety of the battery cell 20.

Referring to FIG. 3, FIG. 4, and FIG. 5, in some embodiments, the protective member 21 is a patch, and the protective member 21 is attached to an outer surface of the end cap 222, to totally cover the end cap 222 and cover the first connection portion 223 and an upper end face of the shell 221.

When liquid leakage occurs at the first connection portion 223, the liquid absorbing layer 212 can absorb liquid leaking from the first connection portion 223, and when the liquid absorbing layer 212 absorbs the liquid and reaches saturation, the barrier layer 213 can prevent the liquid from dripping through the side of the liquid absorbing layer 212 facing away from the first connection portion 223, so that the liquid absorbed by the liquid absorbing layer 212 is less likely to leak out, and the liquid is prevented from flowing in all directions to cause short circuit and fire or from being ignited by high-voltage sparking, helping improve the safety of the battery cell 20.

In some embodiments, a material of the barrier layer 213 includes an insulating material.

The insulating material may be made of plastic or rubber. In some embodiments, the barrier layer 213 is made of polyethylene terephthalate.

By causing the material of the barrier layer 213 to include an insulating material, the barrier layer 213 can not only prevent the liquid from dripping through the side of the liquid absorbing layer 212 facing away from the first connection portion 223 when the liquid absorbing layer 212 absorbs the liquid and reaches saturation, but also can play an insulating role, thereby reducing a risk of short circuit caused by contact between another component and the liquid absorbing layer 212.

Referring to FIG. 6 and FIG. 7, in some embodiments, the protective member 21 further includes an insulating layer 214, the insulating layer 214 is located on a side of the liquid absorbing layer 212 facing the first connection portion 223, and the insulating layer 214 is configured to allow liquid to pass through.

The insulating layer 214 is insulative, and the insulating layer 214 is arranged on the side of the liquid absorbing layer 212 facing the first connection portion 223. The insulating layer 214 is closer to the first connection portion 223 than the liquid absorbing layer 212. The liquid absorbing layer 212 is arranged between the barrier layer 213 and the insulating layer 214.

The insulating layer 214 may be made of plastic or rubber. In some embodiments, the insulating layer 214 is made of polyethylene terephthalate.

"The insulating layer 214 is configured to allow liquid to pass through" means that the liquid leaking from the first connection portion 223 can enter the liquid absorbing layer 212 through the insulating layer 214.

By arranging the insulating layer 214, the liquid absorbing layer 212 is arranged between the barrier layer 213 and the insulating layer 214, so that the protective member 21 is arranged on the outer surface of the housing 22. In addition, the insulating layer 214 can reduce a speed at which the liquid leaks from the first connection portion 223 to some extent, so that the liquid passing through the insulating layer 214 can be effectively absorbed by the liquid absorbing layer 212, helping improve the safety of the battery cell 20.

Referring to FIG. 6 and FIG. 7, in some embodiments, a first through hole 2141 is provided on the insulating layer 214.

The insulating layer 214 has a first surface facing the liquid absorbing layer 212 and a second surface facing away from the liquid absorbing layer 212. The first through hole 2141 runs through the first surface and the second surface.

By providing the first through hole 2141 on the insulating layer 214, the liquid leaking from the first connection portion 223 can enter the liquid absorbing layer 212 through the first through hole 2141 to be absorbed by the liquid absorbing layer 212.

In some embodiments, a plurality of first through holes 2141 are provided on the insulating layer 214, and the plurality of first through holes 2141 are distributed at intervals on the insulating layer 214, so that the liquid leaking from the first connection portion 223 can enter the liquid absorbing layer 212 through the plurality of first through holes 2141, helping the liquid absorbing layer 212 quickly absorb the leaked liquid.

Referring to FIG. 6 and FIG. 7, in some embodiments, a hole diameter of the first through hole 2141 is D, and D meets: 0.2 mm≤D≤2 mm.

D represents the hole diameter of the first through hole 2141. A value of the hole diameter D of the first through hole 2141 may be 0.2 mm, 0.4 mm, 0.6 mm, 0.8 mm, 1 mm, 1.2 mm, 1.4 mm, 1.6 mm, 1.8 mm, or 2 mm.

By setting the hole diameter of the first through hole 2141 between 0.2 mm and 2 mm, the liquid can be allowed to pass through, and a strength of the protective member 21 is not too low. If D<0.2 mm, the hole diameter of the first through hole 2141 is excessively small, which is not conducive to passing through of the liquid. If D>2 mm, the hole diameter of the first through hole 2141 is excessively large, the strength of the protective member 21 may be reduced, leading to a decrease in a protection effect on the housing 22.

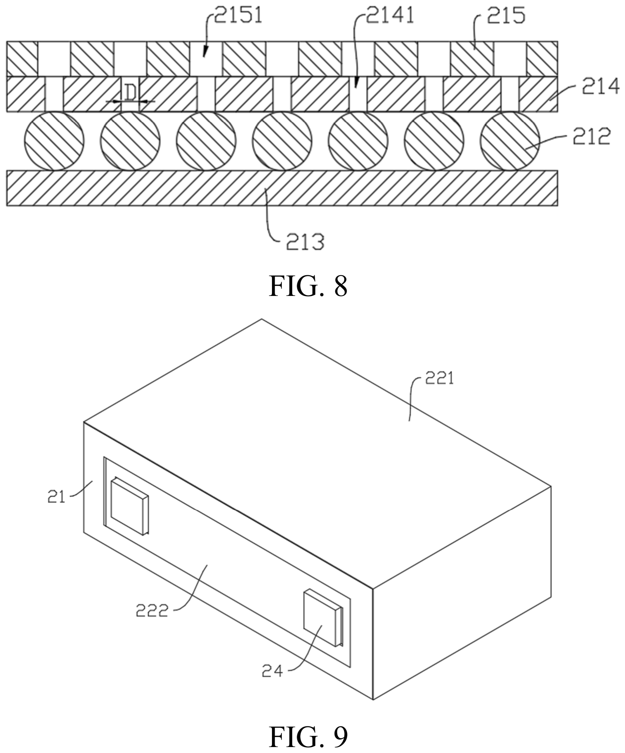

Referring to FIG. 8, FIG. 8 is a schematic diagram of a connection between a protective member 21 and an adhesive layer 215 according to some embodiments of the present application. In some embodiments, the insulating layer 214 is connected to the shell 221 and/or the end cap 222 through an adhesive layer 215, and a projection of the adhesive layer 215 at least partially does not overlap with a projection of the first through hole 2141.

The adhesive layer 215 has a bonding function, so that the insulating layer 214 can be bonded to the shell 221 and/or the end cap 222.

"A projection of the adhesive layer 215 at least partially does not overlap with a projection of the first through hole 2141" may be understood as that the adhesive layer 215 cannot fully block the first through hole 2141, or the adhesive layer 215 avoids at least a part of the first through hole 2141.

The insulating layer 214 is bonded to the shell 221 and/or the end cap 222 through the adhesive layer 215, and the adhesive layer 215 may prevent the liquid from flowing toward the liquid absorbing layer 212. The projection of the adhesive layer 215 at least partially does not overlap with the projection of the first through hole 2141, that is, the adhesive layer 215 does not fully block the first through hole 2141, so that the liquid can bypass the adhesive layer 215 and enter the liquid absorbing layer 212 through the first through hole 2141.

Referring to FIG. 8, in some embodiments, the adhesive layer 215 is provided with a second through hole 2151, and a position of the second through hole 2151 corresponds to a position of the first through hole 2141.

The adhesive layer 215 has a third surface facing away from the insulating layer 214 and a fourth surface facing the insulating layer 214, and the second through hole 2151 runs through the third surface and the fourth surface.

A hole diameter of the second through hole 2151 may be greater than the hole diameter of the first through hole 2141, or may be equal to the hole diameter of the first through hole 2141, or may be less than the hole diameter of the first through hole 2141. A projection of the second through hole 2151 at least partially overlaps with the projection of the first through hole 2141.

In some embodiments, the second through hole 2151 and the first through hole 2141 are coaxially arranged.

By providing the second through hole 2151 on the adhesive layer 215, the liquid leaking from the first connection portion 223 passes through the adhesive layer 215 through the second through hole 2151, so that the liquid leaking from the first connection portion 223 can be absorbed by the liquid absorbing layer 212, thereby ensuring the safety of the battery cell 20.

In some embodiments, the insulating layer 214 is connected to the shell 221 and/or the end cap 222 through an adhesive layer 215, and the adhesive layer 215 is configured to be dissolvable by the liquid.

The adhesive layer 215 can be dissolved by the liquid, so that the liquid leaking from the first connection portion 223 can pass through the adhesive layer 215 and absorbed by the protective member 21. It should be noted that, the liquid leaking from the first connection portion 223 can only dissolve the adhesive layer 215 near a position from which the liquid leaks and does not dissolve the whole adhesive layer 215, so that a connection between the protective member 21 and the housing 22 can be ensured.

Referring to FIG. 9, FIG. 9 is a schematic structural diagram of a battery cell 20 according to some other embodiments of the present application. In some other embodiments, the protective member 21 extends along an extending track of the first connection portion 223 and totally covers the first connection portion 223. As shown in FIG. 9, the battery cell 20 is a prismatic battery cell, and the protective member 21 is in a shape of a rectangular frame. Optionally, when the battery cell 20 is a cylindrical battery cell, the protective member 21 may be a circular ring structure.

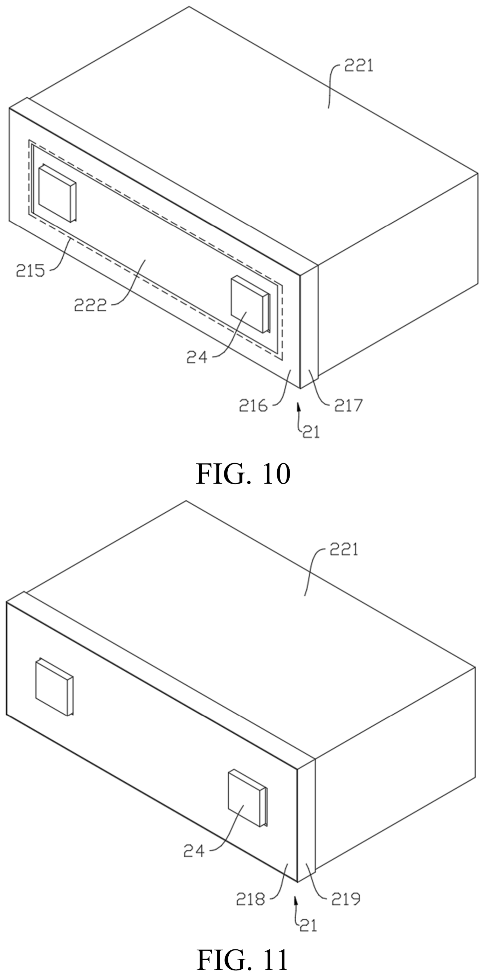

Referring to FIG. 10, FIG. 10 is a schematic structural diagram of a battery cell 20 according to still some other embodiments of the present application. In still some other embodiments, the protective member 21 includes a first protective portion 216 and a second protective portion 217 that are perpendicular to each other, and the first protective portion 216 covers the first connection portion 223. The second protective portion 217 is attached to the outer surface of the shell 221 or the end cap 222.

The first protective portion 216 is a portion of the protective member 21 covering the first connection portion 223 and mainly absorbs the liquid leaking from the first connection portion 223. The second protective portion 217 is attached to the outer surface of the shell 221 or the end cap 222, so that the protective member 21 is connected to the shell 221 or the end cap 222. In addition, the second protective portion 217 can further prevent the liquid from flowing in all directions.

In the embodiment shown in FIG. 10, the first connection portion 223 is located at one end of the housing 22, the first protective portion 216 covers the first connection portion 223, and the second protective portion 217 is attached to the outer surface of the shell 221.

In some other embodiments, the first connection portion 223 is arranged around an outer peripheral surface of the housing 22. In this case, the first protective portion 216 covers the first connection portion 223, and the second protective portion 217 is attached to the outer surface of the end cap 222.

The first protective portion 216 covers the first connection portion 223, and the second protective portion 217 is attached to the outer surface of the shell 221 or the end cap 222. On one hand, when the liquid leaking from the first connection portion 223 spreads toward the shell 221 or the end cap 222, the liquid may also be absorbed by the second protective portion 217, so that a protection area of the protective member 21 is enlarged, helping improve the safety of the battery cell 20. On the other hand, the second protective portion 217 is attached to the shell 221 or the end cap 222, so that the connection between the protective member 21 and the housing 22 is enhanced, and the protective member 21 is not easy to separate from the housing 22.

In some embodiments, the first protective portion 216 is connected to the shell 221 and/or the end cap 222 through an adhesive layer 215.

The first protective portion 216 may be connected to the shell 221 through the adhesive layer 215, or may be connected to the end cap 222 through the adhesive layer 215, or may be connected to both the shell 221 and the end cap 222 through the adhesive layer 215.

The first protective portion 216 is connected to the shell 221 and/or the end cap 222 through the adhesive layer 215, so that a connection strength between the first protective portion 216 and the housing 22 is enhanced, helping ensure a liquid absorption effect of the first connection portion 223 during liquid leakage.

Referring to FIG. 10, in yet some other embodiments, the adhesive layer 215 extends along an outer contour track of the first protective portion 216.

Referring to FIG. 10, the adhesive layer 215 is shown by a dashed line in FIG. 10. The liquid leaking from the first connection portion 223 easily leaks out from an outer contour of the first protective portion 216, and the leaked liquid cannot be absorbed by the protective member 21. Therefore, to improve a liquid absorption effect of the protective member 21, the adhesive layer 215 extends along the outer contour of the first protective portion 216, so that the adhesive layer 215 can play a sealing role, to prevent the liquid from exuding from the outer contour of the first protective portion 216.

The adhesive layer 215 extends along the outer contour track of the first protective portion 216, so that the adhesive layer 215 can play a sealing role and prevent the liquid from exuding from the outer contour of the first protective portion 216, helping the protective member 21 absorb the liquid leaking from the first connection portion 223 and further improve the safety of the battery cell 20.

In some embodiments, the first protective portion 216 is an annular sheet-like structure, and the first protective portion 216 is attached to the end cap 222 and the shell 221 and covers the first connection portion 223 at a connection position of the end cap 222 and the shell 221. The second protective portion 217 is also an annular structure, and the second protective portion 217 is attached to a periphery of the shell 221.

In some embodiments, a material of the liquid absorbing layer 212 can absorb liquid at least 3 times a volume of the liquid absorbing layer.

A liquid absorbing material that can absorb liquid at least 3 times a volume of the material is made into the protective member 21, so that the protective member 21 absorbs the liquid leaking from the first connection portion 223. An amount of free liquid in the battery cell 20 is limited, so that when the liquid absorbing material can absorb liquid at least three times the volume of the material, it can be ensured that the leaked liquid is effectively absorbed.

In some embodiments, the liquid absorbing material includes at least one of sponge, carbon fiber, or adsorption resin.

The sponge, the carbon fiber, and the adsorption resin have a strong liquid absorbing capability, which is conducive to fully absorbing the liquid leaking from the first connection portion 223 and improving the safety of the battery cell 20.

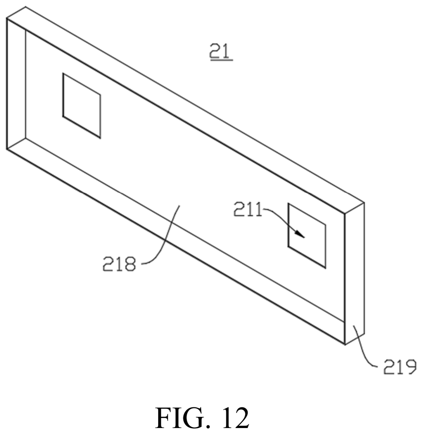

Referring to FIG. 11 and FIG. 12, FIG. 11 is a schematic structural diagram of a battery cell 20 according to yet some other embodiments of the present application. FIG. 12 is a schematic structural diagram of a protective member 21 according to some other embodiments of the present application. In still some other embodiments, an accommodating space configured to collect liquid is formed in the protective member 21, and the first connection portion 223 is at least partially located in the accommodating space.

The first connection portion 223 may be partially located in the accommodating space of the protective member 21, or may be totally located in the accommodating space of the protective member 21. In this way, when the liquid leaks from the first connection portion 223, the leaked liquid can be stored in the accommodating space.

The accommodating space is formed in the protective member 21, and the liquid leaking from the first connection portion 223 can be first stored in the accommodating space and then gradually absorbed by the liquid absorbing layer 212, so that the liquid is prevented from flowing in all directions to cause short circuit and fire or from being ignited by high-voltage sparking, helping improve the safety of the battery cell 20.

Referring to FIG. 11 and FIG. 12, in some embodiments, the protective member 21 includes a top wall 218 and a peripheral wall 219, the top wall 218 covers the outer surface of the end cap 222, and the peripheral wall 219 is arranged around an outer edge of the top wall 218. The peripheral wall 219 covers at least a part of an outer peripheral surface of the shell 221, and the top wall 218 and the peripheral wall 219 encircle the accommodating space.

The top wall 218 is a part of the protective member 21 covering the outer surface of the end cap 222, the peripheral wall 219 is a part arranged around the top wall 218, and the top wall 218 and the peripheral wall 219 can encircle the accommodating space configured to accommodate liquid.

In the embodiment shown in FIG. 11, the first connection portion 223 is located at one end of the housing 22, the top wall 218 covers the first connection portion 223, and the peripheral wall 219 is attached to the outer surface of the shell 221.

In some other embodiments, the first connection portion 223 is arranged around the outer peripheral surface of the housing 22. In this case, the peripheral wall 219 covers the first connection portion 223, and the top wall 218 is attached to the outer surface of the end cap 222.

The top wall 218 and the peripheral wall 219 encircle the accommodating space, when liquid leakage occurs at the first connection portion 223, the protective member 21 can first store the liquid leaking from the first connection portion 223 in the accommodating space, and the liquid is then gradually absorbed by the liquid absorbing layer 212, so that the liquid is prevented from flowing in all directions to cause short circuit and fire or from being ignited by high-voltage sparking, helping improve the safety of the battery cell 20.

Referring to FIG. 3, FIG. 4, and FIG. 5, in some embodiments, the battery cell 20 includes a pressure relief mechanism 25, and the pressure relief mechanism 25 is connected to the end cap 222 or the shell 221 and forms a second connection portion 251. The protective member 21 covers at least a part of the second connection portion 251.

The pressure relief mechanism 25 is a component configured to open when internal pressure or temperature of the battery cell 20 reaches detonation pressure to release the internal pressure of the battery cell 20. Optionally, the pressure relief mechanism 25 is welded to the end cap 222 or the shell 221, and the second connection portion 251 is a welding seam.

Referring to FIG. 5, the second connection portion 251 is shown by a dash-dot line in FIG. 5.

The second connection portion 251 is also a relatively weak position, and the liquid easily leaks from the second connection portion 251. At least a part of the second connection portion 251 is covered by the protective member 21, so that when liquid leakage occurs at the second connection portion 251, the liquid absorbing layer 212 can absorb liquid leaking from the second connection portion 251, and the barrier layer 213 can prevent the liquid from dripping when the liquid absorbing layer 212 absorbs the liquid and reaches saturation. Therefore, the liquid absorbed by the liquid absorbing layer 212 is less likely to leak out, and the liquid is prevented from flowing in all directions to cause short circuit and fire or from being ignited by high-voltage sparking, helping improve the safety of the battery cell 20.

In some embodiments, the protective member 21 totally covers the first connection portion 223.

The protective member 21 totally covers the first connection portion 223. In this way, no matter from which on the first connection portion 223 liquid leaks, the liquid can be absorbed by the liquid absorbing layer 212, so that the liquid is further prevented from flowing in all directions to cause short circuit and fire or from being ignited by high-voltage sparking, helping improve the safety of the battery cell 20.

In some embodiments, the protective member 21 covers at least a part of the end cap 222 and at least a part of the shell 221.

In the embodiments shown in FIG. 3 to FIG. 5, the protective member 21 totally covers the end cap 222 and covers an end portion of the shell 221 facing the protective member 21.

In the embodiment shown in FIG. 9, the protective member 21 covers a part of the end cap 222 and covers the end portion of the shell 221 facing the protective member 21.

In the embodiment shown in FIG. 10, the protective member 21 covers a part of the end cap 222, the end portion of the shell 221 facing the protective member 21, and a part of the outer peripheral surface of the shell 221.

In the embodiment shown in FIG. 11, the protective member 21 totally covers the end cap 222, and covers the end portion of the shell 221 facing the protective member 21 and a part of the outer peripheral surface of the shell 221.

The protective member 21 covers at least a part of the end cap 222 and at least a part of the shell 221, so that positions near the first connection portion 223 are all covered, thereby further improving an absorption effect for the liquid leaking from the first connection portion 223.

Referring to FIG. 3 to FIG. 5 and FIG. 9 to FIG. 11, in some embodiments, the battery cell 20 includes an electrode terminal 24, and the electrode terminal 24 is arranged on the end cap 222. The protective member 21 is provided with an avoidance hole 211 configured to avoid the electrode terminal 24.

The electrode terminal 24 is a component configured to output or input electric energy of the battery cell 20.

The electrode terminal 24 runs through the avoidance hole 211 to extend out of the protective member 21, so as to be connected to a bus member or a power consuming device.

In an embodiment that the protective member 21 is configured to absorb the liquid leaking from the first connection portion 223, the liquid leaking from the first connection portion 223 is absorbed, so that the liquid is not likely to flow out from the avoidance hole 211.

In an embodiment that an accommodating space configured to collect liquid is formed in the protective member 21, the avoidance hole 211 is separated from the accommodating space, so that the liquid does not flow out from the avoidance hole 211.

The electrode terminal 24 needs to output electric energy of the battery cell 20 or input electric energy to the battery cell 20, so that when the protective member 21 is arranged on the end cap 222, the protective member needs to avoid the electrode terminal 24, to prevent the protective member 21 from interfering with input or output of the electric energy of the battery cell 20.

In some embodiments, the battery cell 20 further includes an electrode assembly 23, and the electrode assembly 23 is accommodated in the housing 22. The end cap 222 is configured to support the electrode assembly 23 in a gravity direction.

The electrode assembly 23 is a component in the battery cell 20 that undergoes an electrochemical reaction. The housing 22 may include one or more electrode assemblies 23. The electrode assembly 23 is mainly formed by winding or stacking a positive electrode plate and a negative electrode plate, and a separator is generally arranged between the positive electrode plate and the negative electrode plate. Parts of the positive electrode plate and the negative electrode plate with active substances form a body portion of the electrode assembly 23, while parts of the positive electrode plate and the negative electrode plate without active substances separately form tabs. The positive electrode tab and the negative electrode tab may be located at one end of the body portion together or at two ends of the body portion separately. During charging and discharging of the battery 100, a positive electrode active substance and a negative electrode active substance react with an electrolyte solution.

The end cap 222 supports the electrode assembly 23 in the gravity direction, and the end cap 222 is a bottom wall of the housing 22 in this case.

The end cap 222 supports the electrode assembly 23 in the gravity direction, which corresponds to a scenario in which the battery cell 20 is inverted and used. When the battery cell 20 is inverted and used, a risk of liquid leakage at the first connection portion 223 is increased, and the protective member 21 can play a better protection effect.

In some embodiments, the shell 221 includes a side wall and a bottom wall that are integrally formed, and the side wall is arranged around the bottom wall. Along a thickness direction of the bottom wall, one end of the side wall is connected to the bottom wall, and the other end of the side wall encircles an opening. The side wall and the bottom wall jointly define an accommodating cavity. The battery cell 20 further includes an electrode assembly 23 and an electrode terminal 24, and the electrode assembly 23 is accommodated in the accommodating cavity. The electrode assembly 23 is electrically connected to the electrode terminal 24. The end cap 222 closes the opening, the end cap 222 is configured to support the electrode assembly 23 in a gravity direction, and the electrode terminal 24 is arranged on the bottom wall.

When the shell 221 is provided, the side wall and the bottom wall are an integral structure. The side wall and the bottom wall may be integrally formed through stamping or may be integrally formed through casting. One end of the side wall is connected to the bottom wall, and the other end of the side wall is connected to the end cap 222 to form the first connection portion 223. Along the thickness direction of the bottom wall, the bottom wall and the end cap 222 are arranged opposite to each other.

The end cap 222 supports the electrode assembly 23 in the gravity direction, which corresponds to a scenario in which the battery cell 20 is inverted and used. When the battery cell 20 is inverted and used, a risk of liquid leakage at the first connection portion 223 is increased, and the protective member 21 can play a better protection effect. In addition, the electrode terminal 24 is arranged on the bottom wall, and compared with a technical solution that the electrode terminal 24 is arranged on the end cap 222, liquid leakage is less likely to occur at the electrode terminal 24 (the electrode terminal 24 is located on the top of the housing 22, and the liquid has small pressure on the electrode terminal 24). Besides, the protective member 21 may not be provided with the avoidance hole 211 for avoiding the electrode terminal 24, so that an electrolyte solution stored in the protective member 21 is less likely to leak from the avoidance hole 211, helping improve a liquid storage capability of the protective member 21.

An embodiment of the present application further provides a battery 100, including the foregoing battery cell 20.

In some embodiments, the battery 100 further includes a wire harness isolation member, and a liquid drainage channel is provided on the wire harness isolation member. The barrier layer 213 is provided with a third through hole, and the third through hole is provided opposite to the liquid drainage channel.

The wire harness isolation member is a component in the battery 100 configured to arrange and sort wire harness. The liquid drainage channel is provided on the wire harness isolation member, and the liquid drainage channel can guide the liquid to a specific position of the box 10, so that the safety of the battery 100 is not affected by the liquid.

By providing the third through hole at a position of the barrier layer 213 corresponding to the liquid drainage channel, when the liquid absorbing layer 212 reaches saturation, the liquid can drip from the third through hole into the liquid drainage channel, and the liquid passing through the liquid drainage channel no longer has a safety risk, helping improve the safety of the battery cell 20.

In some embodiments, the battery 100 further includes a box 10, the battery cell 20 is arranged in the box 10, and the end cap 222 is arranged on a side of the battery cell 20 close to a bottom wall of the box 10.

The bottom wall of the box 10 is a wall surface on the box 10 opposite to an open end of the box 10.

The end cap 222 is arranged on the side of the battery cell 20 close to the bottom wall of the box 10, that is, the battery cell 20 is inverted in the box 10.

An embodiment of the present application further provides a power consuming device, including the foregoing battery 100, where the battery 100 is configured to provide electric energy for the power consuming device.

According to some embodiments of the present application, reference is made to FIG. 3 to FIG. 7.

An embodiment of the present application provides a battery cell 20, including a housing 22 and a protective member 21, where the housing 22 includes a shell 221 and an end cap 222, the shell 221 has an opening, and the end cap 222 is connected to the shell 221 and closes the opening. The end cap 222 is connected to the shell 221 to form a first connection portion 223. The protective member 21 is arranged on an outer surface of the housing 22 and covers at least a part of the first connection portion 223, and the protective member 21 is configured to store liquid leaking from the first connection portion 223. The protective member 21 is arranged on the battery cell 20, and the protective member 21 covers at least a part of the first connection portion 223. When liquid leakage occurs at the first connection portion 223, the protective member 21 can store the liquid leaking from the first connection portion 223, to prevent the liquid from flowing in all directions to cause short circuit and fire or from being ignited by high-voltage sparking, helping improve the safety of the battery cell 20.

The protective member 21 is configured to absorb the liquid leaking from the first connection portion 223. When liquid leakage occurs at the first connection portion 223, the protective member 21 can absorb the liquid leaking from the first connection portion 223, to prevent the liquid from flowing in all directions to cause short circuit and fire or from being ignited by high-voltage sparking, helping improve the safety of the battery cell 20.

The protective member 21 includes a liquid absorbing layer 212 and a barrier layer 213, and the protective member 21 is configured to absorb the liquid. The barrier layer 213 is located on a side of the liquid absorbing layer 212 facing away from the first connection portion 223. The liquid absorbing layer 212 can absorb the liquid, to prevent the liquid leaking from the first connection portion 223 from flowing in all directions to cause short circuit and fire or from being ignited by high-voltage sparking, helping improve the safety of the battery cell 20. The barrier layer 213 is arranged on the side of the liquid absorbing layer 212 facing away from the first connection portion 223, so that the barrier layer 213 can play an insulating role to reduce a risk of short circuit caused by contact between another component and the liquid absorbing layer 212, and due to existence of the barrier layer 213, an electrolyte solution absorbed by the liquid absorbing layer 212 is less likely to leak out, further improving the safety of the battery cell 20.

The protective member 21 further includes an insulating layer 214, the insulating layer 214 is located on a side of the liquid absorbing layer 212 facing the first connection portion 223, and the insulating layer 214 is configured to allow liquid to pass through. By arranging the insulating layer 214, the liquid absorbing layer 212 is arranged between the barrier layer 213 and the insulating layer 214, so that the protective member 21 is arranged on the outer surface of the housing 22. In addition, the insulating layer 214 can reduce a speed at which the liquid leaks from the first connection portion 223 to some extent, so that the liquid passing through the insulating layer 214 can be effectively absorbed by the liquid absorbing layer 212, helping improve the safety of the battery cell 20.

A first through hole 2141 is provided on the insulating layer 214. By providing the first through hole 2141 on the insulating layer 214, the liquid leaking from the first connection portion 223 can enter the liquid absorbing layer 212 through the first through hole 2141 to be absorbed by the liquid absorbing layer 212.

The foregoing merely describes preferred embodiments of the present application and is not intended to limit the present application. For a person skilled in the art, the present application may have various modifications and changes. Any modification, equivalent replacement, or improvement made without departing from the spirit and principle of the present application shall fall within the protection scope of the present application.

## Claims

1. A battery cell, comprising:
a housing, comprising a shell and an end cap, wherein the shell has an opening, the end cap is connected to the shell and closes the opening, and the end cap is connected to the shell to form a first connection portion; and
a protective member, arranged on an outer surface of the housing and covering at least a part of the first connection portion, wherein
the protective member comprises:
a liquid absorbing layer; and
a barrier layer, located on a side of the liquid absorbing layer facing away from the first connection portion.

2. The battery cell according to claim 1, wherein a material of the barrier layer comprises an insulating material.

3. The battery cell according to claim 1 or 2, wherein the protective member further comprises an insulating layer, the insulating layer is located on a side of the liquid absorbing layer facing the first connection portion, and the insulating layer is configured to allow liquid to pass through.

4. The battery cell according to claim 3, wherein a first through hole is provided on the insulating layer.

5. The battery cell according to claim 4, wherein a hole diameter of the first through hole is D, and D meets: 0.2 mm≤D≤2 mm.

6. The battery cell according to claim 4 or 5, wherein the insulating layer is connected to the shell and/or the end cap through an adhesive layer, and a projection of the adhesive layer at least partially does not overlap with a projection of the first through hole.

7. The battery cell according to claim 6, wherein the adhesive layer is provided with a second through hole, and a position of the second through hole corresponds to a position of the first through hole.

8. The battery cell according to any one of claims 3 to 7, wherein the insulating layer is connected to the shell and/or the end cap through an adhesive layer, and the adhesive layer is configured to be dissolvable by the liquid.

9. The battery cell according to any one of claims 1 to 8, wherein the protective member comprises a first protective portion and a second protective portion that are perpendicular to each other, the first protective portion covers the first connection portion, and the second protective portion is attached to an outer surface of the shell or the end cap.

10. The battery cell according to claim 9, wherein the first protective portion is connected to the shell and/or the end cap through an adhesive layer.

11. The battery cell according to claim 10, wherein the adhesive layer extends along an outer contour track of the first protective portion.

12. The battery cell according to any one of claims 1 to 11, wherein a material of the liquid absorbing layer is capable of absorbing liquid at least 3 times a volume of the liquid absorbing layer.

13. The battery cell according to any one of claims 1 to 12, wherein the material of the liquid absorbing layer comprises at least one of sponge, carbon fiber, or adsorption resin.

14. The battery cell according to any one of claims 1 to 13, wherein an accommodating space configured to collect liquid is formed in the protective member, and the first connection portion is at least partially located in the accommodating space.

15. The battery cell according to claim 14, wherein the protective member comprises a top wall and a peripheral wall, the top wall covers the outer surface of the end cap, the peripheral wall is arranged around an outer edge of the top wall, the peripheral wall covers at least a part of an outer peripheral surface of the shell, and the top wall and the peripheral wall encircle the accommodating space.

16. The battery cell according to any one of claims 1 to 15, wherein the battery cell comprises a pressure relief mechanism, the pressure relief mechanism is connected to the end cap or the shell and forms a second connection portion, and the protective member covers at least a part of the second connection portion.

17. The battery cell according to any one of claims 1 to 16, wherein the protective member totally covers the first connection portion.

18. The battery cell according to any one of claims 1 to 17, wherein the protective member covers at least a part of the end cap and at least a part of the shell.

19. The battery cell according to claim 18, wherein the battery cell comprises an electrode terminal, the electrode terminal is arranged on the end cap, and the protective member is provided with an avoidance hole configured to avoid the electrode terminal.

20. The battery cell according to any one of claims 1 to 19, wherein the battery cell further comprises an electrode assembly, the electrode assembly is accommodated in the housing, and the end cap is configured to support the electrode assembly in a gravity direction.

21. The battery cell according to any one of claims 1 to 19, wherein the shell comprises a side wall and a bottom wall that are integrally formed, and the side wall is arranged around the bottom wall; along a thickness direction of the bottom wall, one end of the side wall is connected to the bottom wall, and the other end of the side wall encircles an opening; and the side wall and the bottom wall jointly define an accommodating cavity; and
the battery cell further comprises an electrode assembly and an electrode terminal, the electrode assembly is accommodated in the accommodating cavity, the electrode assembly is electrically connected to the electrode terminal, the end cap closes the opening, the end cap is configured to support the electrode assembly in a gravity direction, and the electrode terminal is arranged on the bottom wall.

22. A battery, comprising the battery cell according to any one of claims 1 to 21.

23. The battery according to claim 22, wherein the battery further comprises a wire harness isolation member, a liquid drainage channel is provided on the wire harness isolation member, the barrier layer is provided with a third through hole, and the third through hole is provided opposite to the liquid drainage channel.

24. The battery according to claim 22 or 23, wherein the battery further comprises a box, the battery cell is arranged in the box, and the end cap is arranged on a side of the battery cell close to a bottom wall of the box.

25. A power consuming device, comprising the battery according to any one of claims 22 to 24, wherein the battery is configured to provide electric energy for the power consuming device.
